# EUROPÄISCHE PATENTSCHRIFT

(11) **EP 1 873 058 B1**
(45) Veröffentlichungstag und Bekanntmachung des Hinweises auf die Patenterteilung: **29.07.2009**
(21) Anmeldenummer: 07011085.3
(22) Anmeldetag: 06.06.2007
(51) Int. Cl.: B64D 1/12, F41F 3/06

(54) **Vorrichtung zum Absetzen von unbemannten Flugkörpern aus einem Luftfahrzeug**
Device for dropping unmanned aerial vehicles from an aircraft
Dispositif pour le largage de missiles d'un aéronef

(30) Priorität: 24.06.2006 DE 102006029147
(43) Veröffentlichungstag der Anmeldung: 02.01.2008
(73) Patentinhaber: LFK-Lenkflugkörpersysteme GmbH, 86529 Schrobenhausen (DE)
(72) Erfinder: Grabmeier, Michael, 83022 Rosenheim (DE)
(74) Vertreter: Hummel, Adam

(56) Entgegenhaltungen:
- EP-A- 0 278 627
- DE-A1- 10 338 963
- DE-A1- 10 342 565
- US-A- 3 769 876
- US-A- 4 161 301

## Beschreibung

### TECHNISCHES GEBIET

Die vorliegende Erfindung betrifft eine Vorrichtung zum Absetzen von unbemannten Flugkörpern aus einem Luftfahrzeug gemäß dem Oberbegriff des Patentanspruchs 1.

Das Absetzen von unbemannten Flugkörpern aus einem Luftfahrzeug, insbesondere aus einem Transportflugzeug, wird auch als "Airdrop" bezeichnet. Dabei werden aus dem fliegenden Luftfahrzeug durch eine geöffnete Heckklappe unbemannte Flugkörper ausgestoßen, die nach dem Ausstoßen aus dem Luftfahrzeug autonom ihre eigene Flugmission antreten. Derartige unbemannte Flugkörper können beispielsweise Marschflugkörper oder auch Aufklärungsdrohnen sein.

### STAND DER TECHNIK

Eine gattungsgemäße Vorrichtung ist beispielsweise aus der DE 103 38 963 A1 bekannt. Dort sind jeweils drei nebeneinander angeordnete Flugkörper an einer oberen Tragstruktur einer Ausziehplattform aufgehängt. Die Ausziehplattform ist in ihrem Querschnitt von der Gestalt eines umgekehrten U, wobei die vertikalen Schenkel an ihrem unteren freien Ende in jeweils einer Führungsschiene des Frachtraumbodens des Transportluftfahrzeugs geführt sind. Zum Absetzen der unbemannten Flugkörper wird die Ausziehplattform mit einem Ausziehfallschirm gekoppelt, der aus einer rückwärtigen Laderaumklappe des Transportluftfahrzeugs ausgestoßen wird, sich entfaltet und aufgrund der auf den Ausziehfallschirm einwirkenden Luftwiderstandkraft die Ausziehplattform aus dem Rumpf des fliegenden Luftfahrzeugs nach hinten herauszieht. Nachdem die mit den unbemannten Flugkörpern versehene Ausziehplattform das Luftfahrzeug verlassen hat, werden die einzelnen unbemannten Flugkörper von der Ausziehplattform ausgekoppelt und starten autonom ihre jeweilige Mission.

Aufgrund der Breite der Ausziehplattform, die durch den seitlichen Abstand der Führungsschienen im Frachtraumboden des Transportluftfahrzeugs bestimmt ist, muss die obere Tragstruktur der Ausziehplattform sehr stabil ausgebildet sein, damit sie die unter ihr aufgehängten unbemannten Flugkörper zuverlässig tragen kann. Diese Ausgestaltung bedingt ein hohes Gewicht der Ausziehplattform, wodurch die Gesamtlast der in einem Transportluftfahrzeug transportierbaren unbemannten Flugkörper in unerwünschter Weise herabgesetzt ist.

Aus der DE 103 42 565 A1 ist eine Vorrichtung für das Absetzen von Marschflugkörpern mittels Airdrop-Launchern aus Transportflugzeugen bekannt, bei welcher die Marschflugkörper in mehreren Reihen nebeneinander und übereinander jeweils mittels eines Pylonschlittens, an dem ein jeweiliger Marschflugkörper aufgehängt ist, in in Längsrichtung verlaufenden Transportschienen geführt sind, die in einem entsprechenden Transportgestell im Inneren des Transportluftfahrzeugs vorgesehen sind. Die einzelnen Marschflugkörper werden dabei mittels eines am jeweiligen Pylonschlitten angebrachten Ausziehfallschirms aus dem Luftfahrzeug einzeln herausgezogen, wonach sich der Pylonschlitten vom unbemannten Flugkörper trennt.

Eine ähnliche Vorrichtung, bei der der Ausstoß des Flugkörpers nicht mittels eines Ausziehfallschirms erfolgt, ist aus der US 4,256,012 A bekannt. Auch die US 5,763,811 zeigt eine ähnliche Vorrichtung allerdings für den Abwurf von Bomben aus einem Transportflugzeug.

Die JP-A 04-260900 offenbart eine Absetzvorrichtung für kleine Raumfahrzeuge, zum Absetzen und Starten derartiger kleiner Raumfahrzeuge aus in großer Höhe fliegenden Transportflugzeugen. Dabei ist das kleine Raumfahrzeug auf einer im Transportflugzeug verschiebbar gehalterten Palette vorgesehen, auf welcher es in Längsrichtung verschiebbar in einer Bodenschiene gehaltert ist. Die mit dem kleinen Raumfahrzeug versehene Palette wird mittels eines Ausziehfallschirms aus dem Transportflugzeug gezogen und anschließend gleitet das kleine Raumfahrzeug entlang der Bodenschiene von der Palette, um dann autonom seine Flugmission zu beginnen.

### DARSTELLUNG DER ERFINDUNG

Aufgabe der vorliegenden Erfindung ist es, eine gattungsgemäße Vorrichtung anzugeben, die es bei einem geringen Eigengewicht gestattet, gleichzeitig mehrere Flugkörper aus einem Luftfahrzeug abzusetzen.

Diese Aufgabe wird durch eine gattungsgemäße Vorrichtung mit den im kennzeichnenden Teil des Patentanspruchs 1 angegebenen Merkmalen gelöst.

Die Vorrichtung zum Absetzen von unbemannten Flugkörpern aus einem Luftfahrzeug weist eine Palette auf, auf der zumindest ein Behälter zur Aufnahme eines Flugkörpers vorgesehen ist, wobei der Behälter einen oberen Behälterabschnitt aufweist, der einen Pylon zur hängenden, lösbaren Halterung des Flugkörpers aufweist. Das erfindungsgemäße Vorsehen eines den Flugkörper halternden Pylons im oberen Behälterabschnitt und eines Stützbereichs für den Flugkörper im unteren Behälterabschnitt ermöglicht es, die größte Last des Flugkörpers über den Stützbereich im unteren Behälterabschnitt unmittelbar auf den Frachtraumboden des Luftfahrzeugs abzustützen und gleichzeitig eine definierte Halterung des unbemannten Flugkörpers am Pylon im oberen Behälterbereich vorzusehen, in welchem üblicherweise auch elektrische Verbindungsanschlüsse zwischen dem Trägerluftfahrzeug und dem unbemannten Flugkörper sowie entsprechende Auslösemechanismen zur Freigabe des unbemannten Flugkörpers vorgesehen sind.

Vorzugsweise ist der Stützbereich im unteren Behälterabschnitt mit einer Gleitbahn zum Transport des Flugkörpers in dessen Längsrichtung versehen.

Anstelle der Gleitbahn kann alternativ auch eine Rollenbahn vorgesehen sein.

In einer weiteren bevorzugten Ausbildung der vorliegenden Erfindung ist der Pylon als Pylonschiene ausgebildet, die in Längsrichtung des Behälters und damit des Flugkörpers verläuft und im oberen Behälterabschnitt vorgesehen ist.

Vorzugsweise ist die Palette an ihrem in Flugkörperrichtung gesehen hinteren Ende mit einem Ausziehfallschirm koppelbar.

In einer bevorzugten Ausführungsform der Erfindung ist zumindest eine seitliche Führungsleiste für den Flugkörper im Behälter vorgesehen, wobei das Vorsehen jeweils einer Führungsleiste links und rechts vom Flugkörper besonders bevorzugt ist. Hierdurch wird der Flugkörper beim Herausbewegen aus dem Behälter zusätzlich zur oberen Schiene seitlich geführt.

Insbesondere bevorzugt ist es, wenn Auslösemittel zum Öffnen der Halterung des Flugkörpers am Pylon vorgesehen sind.

Vorzugsweise weist das Auslösemittel zumindest eine Treibgaskartusche, die das Öffnen der Halterung des Flugkörpers bewirkt, und eine Zündvorrichtung für die Treibgaskartusche auf.

Zur Erhöhung der Sicherheit wird auch bevorzugt, wenn die Zündvorrichtung mittels einer Sicherungseinrichtung, die einen am Pylon vorgesehenen Sicherungsstift aufweist, gegen unbeabsichtigte Zündung gesichert ist.

Wenn die Zündvorrichtung ein Verzögerungsmittel, vorzugsweise einen Hardware-Timer, aufweist, welches bewirkt, dass die Zündvorrichtung erst nach Ablauf einer vorgebbaren Verzögerungszeit nach dem Auslösen der Sicherungseinrichtung entsichert wird, so wird gewährleistet, dass die Palette sich erst eine zeitlang vom Luftfahrzeug weg bewegen kann, bevor die Zündvorrichtung entsichert wird.

Vorzugsweise ist der Sicherungsstift an der Vorderseite des Pylons vorgesehen und mit einer Zugvorrichtung koppelbar, die mit dem Luftfahrzeug verbunden ist.

Ist die Zugvorrichtung von einem Zugabschnitt eines den Flugkörper elektrisch mit dem Luftfahrzeug temporär verbindenden Umbilical-Kabels gebildet, so kann die Zugvorrichtung den Sicherungsstift zeitgleich mit der Abtrennung des Umbilical-Kabels vom Flugkörper aus der Sicherungseinrichtung herausziehen und diese auslösen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine Rückansicht einer erfindungsgemäßen Vorrichtung,
- Fig. 2: eine teilweise geschnittene Seitenansicht einer erfindungsgemäßen Vorrichtung und
- Fig. 3 bis 8: Phasendarstellungen des Absetzvorgangs.

### DARSTELLUNG VON BEVORZUGTEN AUSFÜHRUNGSBEISPIELEN

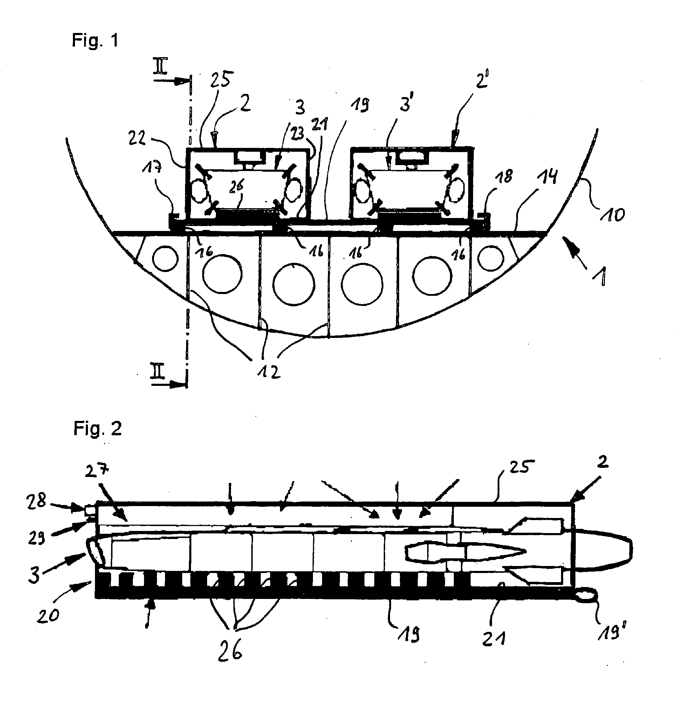

In Fig. 1 ist schematisch der Rumpf 10 eines Luftfahrzeugs 1 dargestellt, das als Transportluftfahrzeug für abzusetzende unbemannte Flugkörper dient. Im unteren Bereich des Rumpfes ist, über Rahmenstützen 12 am unteren Teil des Rumpfes 10 abgestützt, ein Ladeboden 14 vorgesehen, der im hinteren Bereich des Rumpfs 10 in eine schwenkbar absenkbare Laderampe 15 übergeht. Der Ladeboden 14 ist in herkömmlicher Weise mit Rollenbahnen 16 versehen, die in Längsrichtung X des Luftfahrzeugs (rechtwinklig zur Darstellungsebene der Fig. 1) verlaufen und die zur Abstützung von zu ladenden Lasten und für deren Transport in Längsrichtung X dienen. Entsprechende Rollenbahnen sind auch auf der Laderampe 15 vorgesehen. Des weiteren sind in seitlichen Abschnitten des Ladebodens 14 seitliche Führungsschienen 17, 18 vorgesehen, die ebenfalls in Längsrichtung des Luftfahrzeugs parallel zu den Rollenbahnen 16 verlaufen und zur Führung von auf den Rollenbahnen 16 abgestützten Paletten 19 dienen. Die Paletten 19 werden durch die seitlichen Führungsschienen 17, 18 in seitlicher Richtung fixiert. Zur Fixierung der Paletten 19 in Längsrichtung sind im Ladeboden 14 (nicht gezeigte) Verzurrösen im Bereich der Rahmenstützen 12 vorgesehen.

Auf der in Fig. 1 dargestellten Palette 19 sind, in Luftfahrzeuglängsrichtung X gesehen, nebeneinander zwei Behälter 2, 2' gezeigt, die jeweils einen unbemannten Flugkörper 3, 3' enthalten. Die Behälter 2, 2' sind in gleicher Weise ausgestaltet, so dass nachstehend nur der Behälter 2 in Verbindung mit Fig. 2 näher erläutert wird; die Ausgestaltung des zweiten Behälters 2' entspricht der des Behälters 2. Die Palette 19 ist an ihrem in Fig. 2 rechts dargestellten rückwärtigen Ende mit einer Zugöse 19' versehen, in die ein Zugseil 40 einer Ausziehfallschirmanordnung 4 einhängbar ist. Im Frachtraum des Luftfahrzeugs 1 können mehrere derartiger Paletten 19 hintereinander vorgesehen sein.

In Fig. 2 ist der Behälter 2 in einem Vertikalschnitt entlang der Linie II-II in Fig. 1 dargestellt. Der im Querschnitt gemäß Fig. 1 rechteckige Behälter 2 ist in seinem unteren Behälterabschnitt 20 mit einer Bodenplatte 21 versehen, die auf der Palette 19 montiert ist. An den Längsseiten der Bodenplatte 21 angebrachte Seitenwangen 22, 23 verbinden die Bodenplatte 21 mit einer im oberen Behälterabschnitt 24 vorgesehenen und den Behälter 2 abdeckenden Deckenplatte 25. Auf diese Weise ist die kastenförmige Struktur des Behälters 2 gebildet, wobei der Behälter 2 an seinem vorderen, in Fig. 2 linken Ende und an seinem hinteren, in Fig. 2 rechten Ende offen.

Auf der Bodenplatte 21 sind eine Mehrzahl von Rollenanordnungen 26 in Längsrichtung X des Behälters 2 hintereinander angeordnet, wobei jede Rollenanordnung 26 zumindest eine Rolle aufweist, die um eine im rechten Winkel zur Längsrichtung X und vorzugsweise parallel zur Bodenplatte 21 verlaufende Rollenachse drehbar ist. Die Rollenanordnungen 26 auf der Bodenplatte 21 des Behälters 2 bilden eine Rollenbahn, die es einem darauf liegenden Gegenstand gestattet, unter Drehbewegung der Rollen in Längsrichtung X des Behälters 2 verschoben zu werden. Wie in Fig. 1 erkennbar ist, erstreckt sich die jeweilige Rollenanordnung 26 nicht über die gesamte Breite der Bodenplatte 21 des Behälters, sondern nur in deren mittlerem Bereich.

Im oberen Behälterabschnitt 24 ist an der Unterseite der Deckenplatte 25 in deren mittlerem Bereich eine Pylonschiene 27 vorgesehen, die sich in Längsrichtung X des Behälters 2 von dessen vorderem Ende (in Fig. 2 links) bis in den rückwärtigen Bereich des Behälters 2 über etwa dreiviertel von dessen Länge erstreckt.

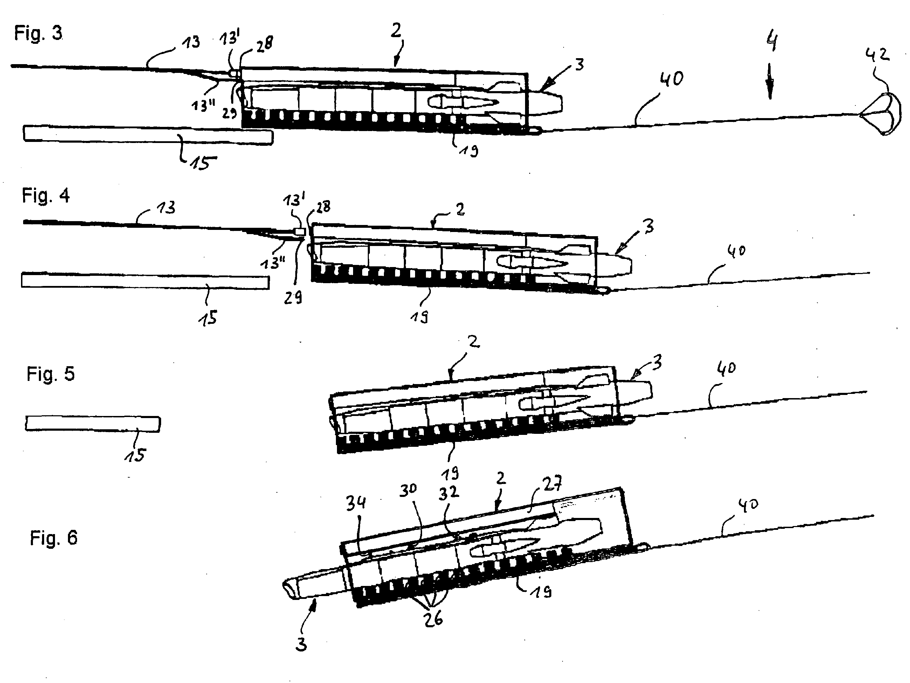

Die Pylonschiene 27 ist in ihrem rückwärtigen Bereich mit (nicht gezeigten) Halterungen zur Anbringung eines im Behälter 2 aufgenommenen, unbemannten Flugkörpers 3 versehen. Die Halterungen können, wie dies beispielsweise bei Bombenhalterungen (Hacken) üblich ist, geöffnet werden und den Flugkörper 3, der mittels üblicher Halteösen 30, 32 von den Halterungen gehalten wird, freigeben. Die in Fig. 2 nicht gezeigten Halteösen 30, 32 des unbemannten Flugkörpers 3 greifen dabei in die Pylonschiene 27 ein und werden bei der Längsbewegung des unbemannten Flugkörpers 3 im Behälter 2 innerhalb der Pylonschiene 27 geführt. Weiterhin ist im vorderen Bereich des Flugkörpers 3 ein nach oben hervorstehender Führungszapfen 34 (Fig. 6) vorgesehen der ebenfalls in die Pylonschiene 27 eingreift und von dieser bei einer Längsbewegung des Flugkörpers 3 geführt wird, wodurch ein Gieren des Flugkörpers, also eine Bewegung um dessen Hochachse, bei einer Längsbewegung des Flugkörpers 3 innerhalb des Behälters 2 vermieden wird.

Am vorderen Ende des Behälters 2 ist an der Stirnseite der Pylonschiene 27 im oberen Behälterabschnitt 24 eine nach vorne weisende elektrische Steckverbindung 28 vorgesehen, an die rückseitig ein in der Pylonschiene 27 verlaufendes (nicht gezeigtes) elektrisches Verbindungskabel (inneres Umbilical-Kabel) angeschlossen ist, welches an seinem rückwärtigen freien Ende seinerseits mit einem Stecker versehen ist, der lösbar mit einer Steckverbindung an der Oberseite des Flugkörpers 3 verbunden ist. Des weiteren ist an der Vorderseite der Pylonschiene 27 ein Sicherungsstift 29 vorgesehen, der mit einem Arretierungsmechanismus innerhalb der Pylonschiene 27 verbunden ist, der eine Bewegung der in die Pylonschiene 27 eingreifenden Mittel (Ösen, Führungszapfen) des Flugkörpers 3 bewirkt, so dass eine Längsbewegung des Flugkörpers 3 erst nach Herausziehen des Sicherungsstiftes 29 aus dem Arretierungsmechanismus ermöglicht ist.

Die Funktionsweise beim Absetzen des unbemannten Flugkörpers aus dem Luftfahrzeug wird nachfolgend unter Bezugnahme auf die Fig. 3 bis 8 näher erläutert.

Um einen für den autonomen Einsatz vorbereiteten unbemannten Flugkörper 3 während des Fluges aus dem Luftfahrzeug 1 abzusetzen, wird zunächst im Flug die Laderampe 15 des Luftfahrzeugs 1 abgesenkt, wie dies bei herkömmlichen Airdrop-Manövern üblich ist. Dann wird ein mittels eines Zugseils 40 an der Zugöse 19' der Palette 19 angebrachter Ausziehfallschirm 42 der Ausziehfallschirmanordnung 4 entgegen der Flugrichtung nach hinten aus dem Rumpf durch die von der abgesenkten Laderampe 15 freigegebene Ladeöffnung ausgestoßen. Der sich aufgrund aerodynamischer Kräfte öffnende Ausziehfallschirm 42 zieht die Palette 19 mit dem Behälter 2 vom Ladeboden 14 über die Laderampe 15 aus dem Rumpf 10 des Luftfahrzeugs heraus.

Fig. 3 zeigt die mit dem Behälter 2 versehene Palette 19 kurz vor dem Verlassen der Laderampe 15 des Luftfahrzeugs 1. Zu erkennen ist in Fig. 3, dass die Palette 19 mit dem Behälter 2 und dem darin befindlichen unbemannten Flugkörper 3 im vorderen Bereich noch auf dem hinteren Bereich der Laderampe 15 abgestützt ist.

Ein äußeres Umbilical-Kabel 13 ist über einen Stecker 13' in die elektrische Steckverbindung 28 des Behälters 2 eingesteckt und verbindet diese und über das innere Umbilical-Kabel den unbemannten Flugkörper 3 mit einer im Luftfahrzeug 1 vorgesehenen elektrischen Versorgungseinrichtung sowie einer Datenverarbeitungseinrichtung, die einen Bordcomputer des unbemannten Flugkörpers 3 mit elektrischer Spannung und mit Missionsdaten versorgen. Diese Datenverarbeitungseinrichtung kann beispielsweise ein Ladekontrollrechner des Store-Management-Systems des Luftfahrzeugs oder ein im Luftfahrzeug vorgesehener Waffenkontrollrechner sein.

Des weiteren ist das äußere Umbilical-Kabel 13 an seinem rückwärtigen Ende, dem Stecker 13' benachbart, mit einem Zugabschnitt 13" versehen, der mit dem Sicherungsstift 29 des Behälters 2 verbunden ist.

Fig. 4 zeigt eine Situation, die unmittelbar nach der in Fig. 3 dargestellten Situation auftritt. Die Palette 19 mit dem Behälter 2 und dem darin befindlichen unbemannten Flugkörper 3 hat die Rampe 15 des Luftfahrzeugs 1 verlassen und der Stecker 13' des äußeren Umbilical-Kabels 13 sowie der mit dem Zugabschnitt 13" verbundene Sicherungsstift 29 haben sich vom Behälter 2 gelöst. Durch das Lösen des Steckers 13' von der elektrischen Steckverbindung 28 des Behälters 2 wurde die Stromzufuhr vom Luftfahrzeug 1 zum unbemannten Flugkörper 3 unterbrochen, wodurch nach einer vorgegebenen Zeitverzögerung die in der Pylonschiene 27 vorgesehenen Halterungen, in die die Halteösen 30, 32 des unbemannten Flugkörpers 3 eingreifen, beispielsweise durch Zündung von entsprechenden Treibgaskartuschen, geöffnet werden. Diese Treibgaskartuschen werden dazu zunächst zeitverzögert entsichert, nachdem der Stecker 13' des äußeren Umbilical-Kabels 13 von der elektrischen Steckverbindung 28 abgezogen wurde.

In Fig. 5 ist ein weiterer späterer Zustand gezeigt, in welchem sich die Palette 19 mit dem Behälter 2 noch weiter von Laderampe 15 des Luftfahrzeugs 1 entfernt hat und in welchem sich die Palette 19 mit dem Behälter 2 und dem darin befindlichen unbemannten Flugkörper 3 aufgrund des gemeinsamen Gewichts mit dem vorderen Ende abgesenkt hat und eine nach vorne abwärts geneigte Position einnimmt. Der Bordrechner des unbemannten Flugkörpers 3 erkennt aufgrund eines Vergleichs von auf den im Behälter 2 befindlichen Flugkörper 3 wirkenden Kräften und Beschleunigungen mit einem abgespeicherten Kräfte- und Beschleunigungs-Profil sowie aufgrund einer aus der abgelaufenen Zeit nach der Trennung des äußeren Umbilical-Kabels 13 vom Behälter 2 und der ermittelten Beschleunigungen durchgeführten Wegberechnung, ob er sich in sicherer Entfernung hinter dem Luftfahrzeug 1 befindet. Er erkennt weiterhin über einen Neigungssensor, ob die Neigung der Palette ausreichend ist, um ein schwerkraftbedingtes Hinausrollen des Flugkörpers 3 aus dem Behälter 2 zu ermöglichen. Ist dies beides der Fall, erfolgt die Zündung der Treibgaskartuschen und daraufhin die Freigabe des Flugkörpers 3 aus den Halterungen der Pylonschiene 27.

Ist diese Freigabe erfolgt, so rollt der unbemannte Flugkörper 3, wie in Fig. 6 dargestellt ist, entlang der von der Palette 19 gebildeten schiefen Ebene auf den Rollenanordnungen 26 nach vorne aus dem Behälter 2 heraus, wobei er mittels seiner auf der Oberseite angebrachten Halteösen 30, 32 sowie dem nach oben hervorstehenden Führungszapfen 34 in der Pylonschiene 27 geführt wird.

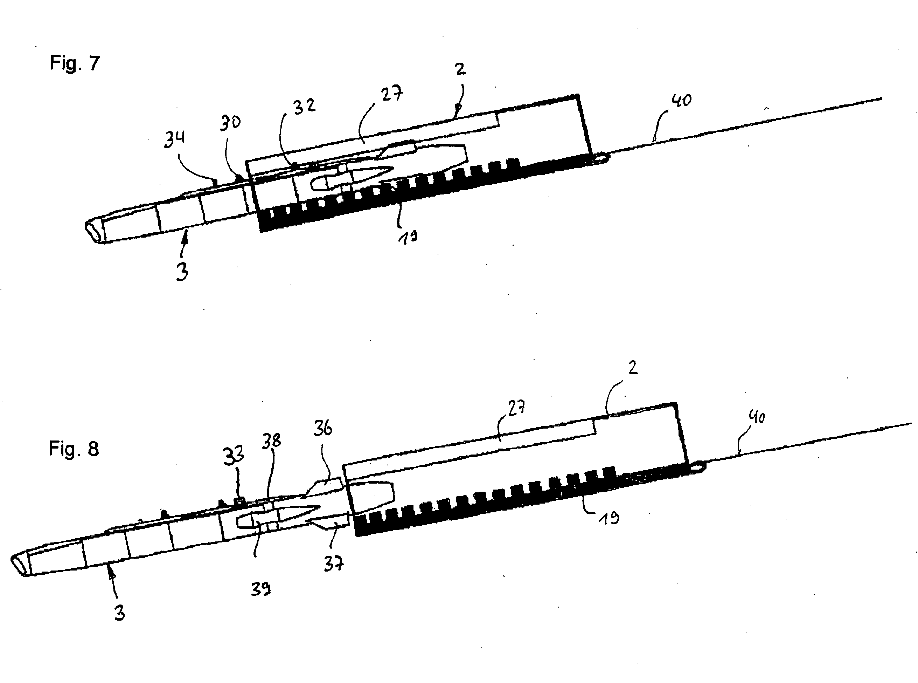

In der in Fig. 7 dargestellten Phase ist der unbemannte Flugkörper 3 noch weiter aus dem Behälter 2 herausgerollt, wobei bereits der Führungszapfen 34 und die vordere Halteöse 30 die Pylonschiene 27 verlassen haben. In diesem Zustand ist auch bereits das innere Umbilical-Kabel von der entsprechenden Steckverbindung des unbemannten Flugkörpers 3 abgezogen.

In der in Fig. 8 dargestellten Phase hat der unbemannte Flugkörper 3 den Behälter 2 nahezu vollständig verlassen, lediglich der Heckabschnitt des Flugkörpers hinter den Stabilisierungsflossen 36, 37 befindet sich noch innerhalb des Behälters 2. Ein von einer Druckfeder nach oben belasteter Kolben 33, der an der Oberseite des Flugkörpers 3 vorgesehen ist und der während des Aufenthalts des Flugkörpers 3 im Behälter 2 von der Pylonschiene 27 niedergehalten wurde, kann nun nach Verlassen des Behälters 2 nach oben ausfahren und nach einer vorgegebenen Zeitverzögerung das Öffnen von während des Aufenthalts des Flugkörpers 3 im Behälter 2 eingefahrenen, seitlich ausschwenkbaren Tragflächen 38 sowie das Starten der Triebwerke 39 des unbemannten Flugkörpers 3 bewirken.

Bevorzugterweise ist im Behälter oder im Flugkörper ein Neigungssensor vorgesehen, der die Neigung der Palette detektiert und ein Neigungssignal an die Zündvorrichtung übermittelt, wobei die Zündvorrichtung nach Ablauf der Verzögerungszeit in Abhängigkeit vom Neigungssignal, nämlich erst bei Erreichen einer vorgegebenen Neigung, entsichert wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug
- 2: Behälter
- 2': Behälter
- 3: unbemannter Flugkörper
- 3': unbemannter Flugkörper
- 4: Ausziehfallschirmanordnung
- 10: Rumpf
- 12: Rahmenstützen
- 13: äußeres Umbilical-Kabel
- 13': Stecker
- 13": Zugabschnitt
- 14: Ladeboden
- 15: Laderampe
- 16: Rollenbahn
- 17: seitliche Führungsschiene
- 18: seitliche Führungsschiene
- 19: Palette
- 19': Zugöse
- 20: unterer Behälterabschnitt
- 21: Bodenplatte
- 22: Seitenwange
- 23: Seitenwange
- 24: oberer Behälterabschnitt
- 25: Deckenplatte
- 26: Rollenanordnung
- 27: Pylonschiene
- 28: elektrische Steckverbindung
- 29: Sicherungsstift
- 30: Halteöse
- 32: Halteöse
- 33: Kolben
- 34: Führungszapfen
- 36: Stabilisierungsflosse
- 37: Stabilisierungsflosse
- 38: Tragfläche
- 39: Triebwerk
- 40: Zugseil
- 42: Ausziehfallschirm

## Patentansprüche

1. Vorrichtung zum Absetzen von unbemannten Flugkörpern aus einem Luftfahrzeug mit zumindest einem Behälter (2, 2') zur Aufnahme eines Flugkörpers (3, 3'), wobei der Behälter (2, 2') einen oberen Behälterabschnitt (24) aufweist, der einen Pylon zur hängenden, lösbaren Halterung des Flugkörpers (3, 3') aufweist,
**dadurch gekennzeichnet,**
**dass** der Behälter (2, 2') auf einer Palette (19) vorgesehen ist und einen unteren Behälterabschnitt (20) aufweist, der als Stützbereich für den Flugkörper (3, 3') ausgebildet ist.

2. Vorrichtung nach Anspruch 1,
**dadurch gekennzeichnet,**
**dass** der Stützbereich eine Gleitbahn für den Flugkörper (3, 3') in dessen Längsrichtung aufweist.

3. Vorrichtung nach Anspruch 1,
**dadurch gekennzeichnet,**
**dass** der Stützbereich eine Rollenbahn für den Flugkörper (3, 3') in dessen Längsrichtung aufweist.

4. Vorrichtung nach einem der Ansprüche 1 bis 3,
**dadurch gekennzeichnet,**
**dass** der Pylon als Pylonschiene (27) ausgebildet ist, die in Längsrichtung des Behälters (2, 2') verläuft.

5. Vorrichtung nach einem der vorhergehenden Ansprüche,
**dadurch gekennzeichnet,**
**dass** die Palette (19) an ihrem in Flugkörperlängsrichtung gesehen hinteren Ende mit einem Ausziehfallschirm () koppelbar ist.

6. Vorrichtung nach einem der vorhergehenden Ansprüche,
**dadurch gekennzeichnet,**
**dass** zumindest eine seitliche Führungsleiste () für den Flugkörper (3, 3') im Behälter (2, 2') vorgesehen ist.

7. Vorrichtung nach Anspruch 6,
**dadurch gekennzeichnet,**
**dass** die zumindest eine Führungsleiste im unteren Behälterabschnitt (20) vorgesehen ist.

8. Vorrichtung nach einem der vorhergehenden Ansprüche,
**dadurch gekennzeichnet,**
**dass** Auslösemittel zum Öffnen der Halterung des Flugkörpers (3, 3') am Pylon vorgesehen sind.

9. Vorrichtung nach Anspruch 8,
**dadurch gekennzeichnet,**
**dass** das Auslösemittel zumindest eine Treibgaskartusche, die das Öffnen der Halterung des Flugkörpers (3, 3') bewirkt, und eine Zündvorrichtung für die Treibgaskartusche aufweist.

10. Vorrichtung nach Anspruch 9,
**dadurch gekennzeichnet,**
**dass** die Zündvorrichtung mittels einer Sicherungseinrichtung, die einen am Pylon vorgesehenen Sicherungsstift (29) aufweist, gegen unbeabsichtigte Zündung gesichert ist.

11. Vorrichtung nach Anspruch 10,
**dadurch gekennzeichnet,**
**dass** die Zündvorrichtung ein Verzögerungsmittel, vorzugsweise einen Hardware-Timer, aufweist, welches bewirkt, dass die Zündvorrichtung erst nach Ablauf einer vorgebbaren Verzögerungszeit nach dem Auslösen der Sicherungseinrichtung entsichert wird.

12. Vorrichtung nach Anspruch 10 oder 11,
**dadurch gekennzeichnet,**
**dass** der Sicherungsstift (29) an der Vorderseite des Pylons vorgesehen und mit einer Zugvorrichtung koppelbar ist, die mit dem Luftfahrzeug (1) verbunden ist.

13. Vorrichtung nach Anspruch 12,
**dadurch gekennzeichnet,**
**dass** die Zugvorrichtung von einem Zugabschnitt (13") eines den Flugkörper (3, 3') elektrisch mit dem Luftfahrzeug temporär verbindenden Umbilical-Kabels (13) gebildet ist, so dass die Zugvorrichtung den Sicherungsstift (29) zeitgleich mit der Abtrennung des Umbilical-Kabels (13) vom Flugkörper (3, 3') aus der Sicherungseinrichtung herausziehen und diese auslösen kann.

14. Vorrichtung nach einem der Ansprüche 11 bis 13,
**dadurch gekennzeichnet,**
**dass** im Behälter oder im Flugkörper ein Neigungssensor vorgesehen ist, der die Neigung der Palette detektiert und ein Neigungssignal an die Zündvorrichtung übermittelt und dass die Zündvorrichtung nach Ablauf der Verzögerungszeit in Abhängigkeit vom Neigungssignal, nämlich erst bei Erreichen einer vorgegebenen Neigung, entsichert wird.

## Claims

1. Apparatus for deployment of unmanned airborne vehicles from an aircraft having at least one container (2, 2') for accommodation of an airborne vehicle (3, 3'), with the container (2, 2') having an upper container section (24) which has a pylon for suspended, detachable holding of the airborne vehicle (3, 3'),
**characterized**
**in that** the container (2, 2') is provided on a pallet (19) and has a lower container section (20) which is in the form of a supporting area for the airborne vehicle (3, 3').

2. Apparatus according to Claim 1,
**characterized**
**in that** the supporting area has a sliding path for the airborne vehicle (3, 3') in its longitudinal direction.

3. Apparatus according to Claim 1,
**characterized**
**in that** the supporting area has a roller path for the airborne vehicle (3, 3') in its longitudinal direction.

4. Apparatus according to one of Claims 1 to 3,
**characterized**
**in that** the pylon is in the form of a pylon rail (27) which runs in the longitudinal direction of the container (2, 2').

5. Apparatus according to one of the preceding claims,
**characterized**
**in that** the pallet (19) can be coupled to an extraction parachute () at the rear end of the pallet (19), seen in the airborne vehicle longitudinal direction.

6. Apparatus according to one of the preceding claims,
**characterized**
**in that** at least one side guide strip () is provided for the airborne vehicle (3, 3') in the container (2, 2').

7. Apparatus according to Claim 6,
**characterized**
**in that** the at least one guide strip is provided in the lower container section (20).

8. Apparatus according to one of the preceding claims,
**characterized**
**in that** the release means are provided in order to open the holder for the airborne vehicle (3, 3') on the pylon.

9. Apparatus according to Claim 8,
**characterized**
**in that** the release means have at least one propellant gas cartridge, which results in the holder of the airborne vehicle (3, 3') being opened, and an initiation apparatus for the propellant gas cartridge.

10. Apparatus according to Claim 9,
**characterized**
**in that** the initiation apparatus is protected against inadvertent initiation by means of a safety device which has a safety pin (29) provided on the pylon.

11. Apparatus according to Claim 10,
**characterized**
**in that** the initiation apparatus has a delay means, preferably a hardware timer, which ensures that the initiation apparatus is armed only after a predeterminable delay time has elapsed following the triggering of the safety device.

12. Apparatus according to Claim 10 or 11,
**characterized**
**in that** the safety pin (29) is provided on the front face of the pylon and can be coupled to a pulling apparatus which is connected to the aircraft (1).

13. Apparatus according to Claim 12,
**characterized**
**in that** the pulling apparatus is formed by a pulling section (13") of an umbilical cable (13) which temporarily electrically connects the airborne vehicle (3, 3') to the aircraft, such that the pulling apparatus can pull the safety pin (29) out of the safety device at the same time that the umbilical cable (13) is disconnected from the airborne vehicle (3, 3'), and can trigger this safety device.

14. Apparatus according to one of Claims 11 to 13,
**characterized**
**in that** an inclination sensor is provided in the container or in the airborne vehicle, which sensor detects the inclination of the pallet and transmits an inclination signal to the initiation apparatus, and in that the initiation apparatus is armed as a function of the inclination signal after the delay time has elapsed, specifically only when a predetermined inclination is reached.

## Revendications

1. Dispositif pour le largage de missiles d'un aéronef, avec au moins un conteneur (2, 2') destiné à recevoir un missile (3, 3'), dans lequel le conteneur (2, 2') comporte une partie de conteneur supérieure (24), qui présente un pylône pour la fixation suspendue détachable du missile (3, 3'), **caractérisé en ce que** le conteneur (2, 2') est prévu sur une palette (19) et présente une partie de conteneur inférieure (20), qui est réalisée en forme de zone d'appui pour le missile (3, 3').

2. Dispositif selon la revendication 1, **caractérisé en ce que** la zone d'appui présente une piste de glissement pour le missile (3, 3') dans sa direction longitudinale.

3. Dispositif selon la revendication 1, **caractérisé en ce que** la zone d'appui présente une piste de roulement pour le missile (3, 3') dans sa direction longitudinale.

4. Dispositif selon l'une quelconque des revendications 1 à 3, **caractérisé en ce que** le pylône est réalisé en forme de rail de pylône (27), qui s'étend dans la direction longitudinale du conteneur (2, 2').

5. Dispositif selon l'une quelconque des revendications précédentes, **caractérisé en ce que** la palette (19) peut, à son extrémité arrière vue dans la direction longitudinale du missile, être couplée à un parachute d'extraction ().

6. Dispositif selon l'une quelconque des revendications précédentes, **caractérisé en ce qu'**il est prévu au moins une barre de guidage latérale () pour le missile (3, 3') dans le conteneur (2, 2').

7. Dispositif selon la revendication 6, **caractérisé en ce que** l'au moins une barre de guidage est prévue dans la partie de conteneur inférieure (20).

8. Dispositif selon l'une quelconque des revendications précédentes, **caractérisé en ce qu'**il est prévu des moyens de déclenchement pour l'ouverture de la fixation du missile (3, 3') sur le pylône.

9. Dispositif selon la revendication 8, **caractérisé en ce que** le moyen de déclenchement comprend au moins une cartouche de gaz propulseur, qui active l'ouverture de la fixation du missile (3, 3'), et un dispositif d'allumage pour la cartouche de gaz propulseur.

10. Dispositif selon la revendication 9, **caractérisé en ce que** le dispositif d'allumage est protégé contre un allumage imprévu au moyen d'un dispositif de sécurité, qui comprend une tige de sécurité (29) prévue sur le pylône.

11. Dispositif selon la revendication 10, **caractérisé en ce que** le dispositif d'allumage comprend un moyen de temporisation, de préférence une minuterie matérielle, qui assure que le dispositif de sécurité n'est désactivé qu'après l'expiration d'une durée de temporisation prédéterminée après le déclenchement du dispositif de sécurité.

12. Dispositif selon l'une quelconque des revendications 10 ou 11, **caractérisé en ce que** la tige de sécurité (29) est prévue sur le côté avant du pylône et peut être couplée à un dispositif de traction, qui est relié à l'aéronef (1).

13. Dispositif selon la revendication 12, **caractérisé en ce que** le dispositif de traction est formé par une partie de traction (13") d'un cordon ombilical (13) reliant électriquement le missile (3, 3') temporairement à l'aéronef, de telle manière que le dispositif de traction puisse extraire la tige de sécurité (29) hors du dispositif de sécurité en même temps que la séparation du cordon ombilical (13) du missile (3, 3'), et déclencher celui-ci.

14. Dispositif selon l'une quelconque des revendications 11 à 13, **caractérisé en ce qu'**il est prévu dans le conteneur ou dans le missile un détecteur d'inclinaison, qui détecte l'inclinaison de la palette et transmet un signal d'inclinaison au dispositif d'allumage et **en ce que** le dispositif d'allumage est désactivé après l'expiration de la durée de temporisation en fonction du signal d'inclinaison, à savoir seulement après l'acquisition d'une inclinaison prédéterminée.
